# EUROPEAN PATENT APPLICATION

(11) **EP 4 336 640 A1**
(43) Date of publication of application: **13.03.2024**
(21) Application number: 22195023.1
(22) Date of filing: 12.09.2022
(51) Int. Cl.: H01M 50/30, F16K 7/00, H01M 50/325, H01M 50/35, H01M 50/358, H01M 50/367, H01M 10/0525, H01M 50/317, H01G 9/12, H01M 10/0567

(54) **REINFORCED VENT**

(71) Applicant: W. L. Gore & Associates G.K., Tokyo 108-0075 (JP)
(72) Inventor: KOBAYASHI, Kotaro, Tokyo, 108-0075 (JP)
(74) Representative: HGF

(57) **Abstract**

A vent is provided herein for use in a closed container, the vent comprising at least one protective fluoropolymer layer and at least one reinforcing layer, wherein the at least one protective fluoropolymer layer at least partially permeates into the at least one reinforcing layer, wherein the at least one protective fluoropolymer layer has a carbon dioxide (CO₂) to water (H₂O) selectivity of at least 600 cm³/g at 30°C and a CO₂ permeability of at least 10,000 cm³/(m² * 24h * atm) at 30°C as measured using methods described herein.

## Description

### Field

The present disclosure is directed to vents for closed containers and closed containers including a vent, specifically to vents for flexible closed containers and flexible closed containers including a vent.

### Background

Vents and vent assemblies can be used to reduce pressure fluctuations within closed containers and to control humidity. Such vents and vent devices must also prevent ingress of dirt and other contaminants, and to also prevent the ingress of water.

Closed containers used to retain a liquid require the vent or vent assembly to prevent leakage of the liquid retained therein whilst also ensuring that any gas generated within the closed container is allowed to escape through the vent to prevent pressure build up within the closed container.

Example closed containers that are used to retain a liquid include battery pouches that retain battery electrolyte. Typical battery pouches are made from flexible materials and include one or more vents in a wall of the battery pouch. Accordingly, gas generated during use from the battery electrolyte is able to escape the battery pouch to ensure that the pressure within the battery pouch does not rise beyond a given threshold to ensure that the battery pouch does not burst or otherwise leak, or the battery pouch loses capacity due to the increase in pressure.

Such vents are required to be selective in the gasses that they allow to pass through them and typically are required to substantially prevent water vapour entering the closed container whilst allowing gasses generated during the lifetime of the closed container such as carbon dioxide to pass out of the closed container through the vent.

However, sometimes the selectivity has to be sacrificed in order for the vent to have sufficient strength to have a long lifetime for the given application.

Accordingly, there remains a need for improved vents or vent assemblies for use with closed containers.

Therefore, at least some embodiments are directed to the provision of improved vent assemblies that solve at least one of these problems.

### Summary

According to a first aspect there is provided a vent for use in a closed container, the vent comprising at least one protective fluoropolymer layer and at least one reinforcing layer, wherein the at least one protective fluoropolymer layer at least partially permeates into the at least one reinforcing layer, wherein the at least one protective fluoropolymer layer has a carbon dioxide (CO₂) to water (H₂O) selectivity of at least 600 cm³/g at 30°C and a CO₂ permeability of at least 10,000 cm³/(m² * 24h * atm) at 30°C as measured using methods described herein.

It has been found that the provision of a vent having an at least one protective fluoropolymer layer at least partially permeating into an at least one reinforcing layer results in a vent that substantially retains the selectivity of the at least one protective fluoropolymer layer whilst significantly increasing the strength of the vent such that the resistance to pressure of the vent is significantly increased.

The CO₂ permeability of materials used in vents typically is reduced as the thickness of the material increases. The CO₂ permeability of materials used in vents typically is increased as the temperature of the material increases. Typically, the thickness of layers of vents need to compromise the requirements of permeability and selectivity with the requirements of structural strength to ensure that the vent is able to withstand the pressures that may develop during use. However, it is has been found that vents according to the present aspect retain good CO₂ permeability of the at least one protective fluoropolymer layer whilst also achieving structural strength to provide increased resistance to burst pressure.

In some embodiments the at least protective fluoropolymer layer may comprise a fluoropolymer having a melting point of less than 320°C.

The at least one protective fluoropolymer layer may comprise a fluoropolymer selected from the group consisting of perfluoroalkoxy alkane (PFA), fluorinated ethylene propylene (FEP), polyvinylfluoride (PVF), polyvinylidene fluoride (PVDF), polychlorotrifluoroethylene (PCTFE), or polyethylenetetrafluoroethylene (ETFE). The at least one protective fluoropolymer layer may comprise PFA or FEP. For example, the at least one protective fluoropolymer layer may comprise PFA.

In some embodiments the at least one protective fluoropolymer layer may have a thickness of from about 5 µm to about 150 µm. The at least one protective fluoropolymer layer may have a thickness of from about 5 µm to about 125 µm. The at least one protective fluoropolymer layer may have a thickness of from about 5 µm to about 100 µm. The at least one protective fluoropolymer layer may have a thickness of from about 5 µm to about 75 µm. The at least one protective fluoropolymer layer may have a thickness of from about 5 µm to about 50 µm. The at least one protective fluoropolymer layer may have a thickness of from about 5 µm to about 25 µm. The at least one protective fluoropolymer layer may have a thickness of from about 10 µm to about 150 µm. The at least one protective fluoropolymer layer may have a thickness of from about 20 µm to about 150 µm. The at least one protective fluoropolymer layer may have a thickness of from about 30 µm to about 150 µm. The at least one protective fluoropolymer layer may have a thickness of from about 40 µm to about 150 µm. The at least one protective fluoropolymer layer may have a thickness of from about 50 µm to about 150 µm.

In some embodiments the at least one protective fluoropolymer layer may have a thickness of from 10 µm to 50 µm. In some embodiments the at least one protective fluoropolymer layer may have a thickness of from 10 µm to 25 µm. In some embodiments the at least one protective fluoropolymer layer may have a thickness of from 12 µm to 25 µm. For example, the at least one protective fluoropolymer may have a thickness of 10 µm, 12 µm, 15 µm, 20 µm, 25 µm, 30 µm, 40 µm or 50 µm.

The at least one reinforcing layer may be a mesh.

The at least one reinforcing layer may have a generally open structure. The at least one reinforcing layer may be porous. The at least one reinforcing layer may be more porous that the at least one protective fluoropolymer layer. The at least one reinforcing layer may be more gas permeable than the at least one protective fluoropolymer layer. Accordingly, the permeability of the vent may be predominantly determined by the permeability of the at least one protective fluoropolymer layer.

The at least one reinforcing layer may be an expanded polymer layer. The at least one reinforcing layer may have a fibrillated structure. The at least one reinforcing layer may have a node and fibril structure where the nodes are interconnected by fibrils. Accordingly, the at least one protective fluoropolymer layer may at least partially permeate into the pores and voids between the nodes and fibrils.

The at least one reinforcing layer may comprise ePTFE.

The at least one reinforcing layer may have a thickness from about 1 µm to about 100 µm. The at least one reinforcing layer may have a thickness from about 5 µm to about 100 µm. The at least one reinforcing layer may have a thickness from about 8 µm to about 100 µm. The at least one reinforcing layer may have a thickness from about 10 µm to about 100 µm. The at least one reinforcing layer may have a thickness from about 15 µm to about 100 µm. The at least one reinforcing layer may have a thickness from about 20 µm to about 100 µm. The at least one reinforcing layer may have a thickness from about 30 µm to about 100 µm. The at least one reinforcing layer may have a thickness from about 1 µm to about 80 µm. The at least one reinforcing layer may have a thickness from about 1 µm to about 60 µm. The at least one reinforcing layer may have a thickness from about 1 µm to about 40 µm. The at least one reinforcing layer may have a thickness from about 1 µm to about 30 µm. The at least one reinforcing layer may have a thickness from about 1 µm to about 25 µm.

The vent may comprise at least two reinforcing layers, wherein a protective fluoropolymer layer is sandwiched between the at least two reinforcing layers.

The vent may have a carbon dioxide to water vapour selectivity of at least 600 cm³/g at 30°C. The vent may have a carbon dioxide to water vapour selectivity of at least 700 cm³/g at 30°C. The vent may have a carbon dioxide to water vapour selectivity of at least 800 cm³/g at 30°C. The vent may have a carbon dioxide to water vapour selectivity of at least 900 cm³/g at 30°C. The vent may have a carbon dioxide to water vapour selectivity of at least 1000 cm³/g at 30°C.

The vent may have a carbon dioxide to water vapour selectivity of from about 600 cm³/g to about 2000 cm³/g at 30°C. The vent may have a carbon dioxide to water vapour selectivity of from about 700 cm³/g to about 2000 cm³/g at 30°C. The vent may have a carbon dioxide to water vapour selectivity of from about 800 cm³/g to about 2000 cm³/g at 30°C. The vent may have a carbon dioxide to water vapour selectivity of from about 900 cm³/g to about 2000 cm³/g at 30°C. The vent may have a carbon dioxide to water vapour selectivity of from about 1000 cm³/g to about 2000 cm³/g at 30°C.

The vent may have a carbon dioxide (CO₂) permeability of at least 25,000 cm³/(m² * 24h * atm) at 30°C. The vent may have a carbon dioxide (CO₂) permeability of at least 50,000 cm³/(m² * 24h * atm) at 30°C. The vent may have a carbon dioxide (CO₂) permeability of at least 75,000 cm³/(m² * 24h * atm) at 30°C. The vent may have a carbon dioxide (CO₂) permeability of at least 100,000 cm³/(m² * 24h * atm) at 30°C.

The vent may have a carbon dioxide (CO₂) permeability of from about 10,000 cm³/(m² * 24h * atm) to about 200,000 cm³/(m² * 24h * atm) at 30°C. The vent may have a carbon dioxide (CO₂) permeability of from about 25,000 cm³/(m² * 24h * atm) to about 200,000 cm³/(m² * 24h * atm) at 30°C. The vent may have a carbon dioxide (CO₂) permeability of from about 50,000 cm³/(m² * 24h * atm) to about 200,000 cm³/(m² * 24h * atm) at 30°C. The vent may have a carbon dioxide (CO₂) permeability of from about 75,000 cm³/(m² * 24h * atm) to about 200,000 cm³/(m² * 24h * atm) at 30°C. The vent may have a carbon dioxide (CO₂) permeability of from about 10,000 cm³/(m² * 24h * atm) to about 190,000 cm³/(m² * 24h * atm) at 30°C. The vent may have a carbon dioxide (CO₂) permeability of from about 10,000 cm³/(m² * 24h * atm) to about 180,000 cm³/(m² * 24h * atm) at 30°C. The vent may have a carbon dioxide (CO₂) permeability of from about 10,000 cm³/(m² * 24h * atm) to about 170,000 cm³/(m² * 24h * atm) at 30°C. The vent may have a carbon dioxide (CO₂) permeability of from about 10,000 cm³/(m² * 24h * atm) to about 160,000 cm³/(m² * 24h * atm) at 30°C.

The protective fluoropolymer layer may have a carbon dioxide permeability of at least 25,000 cm³/(m² * 24h * atm) at 30°C. The protective fluoropolymer layer may have a carbon dioxide (CO₂) permeability of at least 50,000 cm³/(m² * 24h * atm) at 30°C. The protective fluoropolymer layer may have a carbon dioxide (CO₂) permeability of at least 75,000 cm³/(m² * 24h * atm) at 30°C. The protective fluoropolymer layer may have a carbon dioxide (CO₂) permeability of at least 100,000 cm³/(m² * 24h * atm) at 30°C.

The protective fluoropolymer layer may have a carbon dioxide (CO₂) permeability of from about 10,000 cm³/(m² * 24h * atm) to about 200,000 cm³/(m² * 24h * atm) at 30°C. The protective fluoropolymer layer may have a carbon dioxide (CO₂) permeability of from about 25,000 cm³/(m² * 24h * atm) to about 200,000 cm³/(m² * 24h * atm) at 30°C. The protective fluoropolymer layer may have a carbon dioxide (CO₂) permeability of from about 50,000 cm³/(m² * 24h * atm) to about 200,000 cm³/(m² * 24h * atm) at 30°C. The protective fluoropolymer layer may have a carbon dioxide (CO₂) permeability of from about 75,000 cm³/(m² * 24h * atm) to about 200,000 cm³/(m² * 24h * atm) at 30°C. The protective fluoropolymer layer may have a carbon dioxide (CO₂) permeability of from about 10,000 cm³/(m² * 24h * atm) to about 190,000 cm³/(m² * 24h * atm) at 30°C. The protective fluoropolymer layer may have a carbon dioxide (CO₂) permeability of from about 10,000 cm³/(m² * 24h * atm) to about 180,000 cm³/(m² * 24h * atm) at 30°C. The protective fluoropolymer layer may have a carbon dioxide (CO₂) permeability of from about 10,000 cm³/(m² * 24h * atm) to about 170,000 cm³/(m² * 24h * atm) at 30°C. The protective fluoropolymer layer may have a carbon dioxide (CO₂) permeability of from about 10,000 cm³/(m² * 24h * atm) to about 160,000 cm³/(m² * 24h * atm) at 30°C.

The vent may have a carbon dioxide (CO₂) permeability of at least 25,000 cm³/(m² * 24h * atm) at 60°C. The vent may have a carbon dioxide (CO₂) permeability of at least 50,000 cm³/(m² * 24h * atm) at 60°C. The vent may have a carbon dioxide (CO₂) permeability of at least 75,000 cm³/(m² * 24h * atm) at 60°C. The vent may have a carbon dioxide (CO₂) permeability of at least 100,000 cm³/(m² * 24h * atm) at 60°C. The vent may have a carbon dioxide (CO₂) permeability of at least 150,000 cm³/(m² * 24h * atm) at 60°C.

The vent may have a carbon dioxide (CO₂) permeability of from about 10,000 cm³/(m² * 24h * atm) to about 500,000 cm³/(m² * 24h * atm) at 60°C. The vent may have a carbon dioxide (CO₂) permeability of from about 25,000 cm³/(m² * 24h * atm) to about 500,000 cm³/(m² * 24h * atm) at 60°C. The vent may have a carbon dioxide (CO₂) permeability of from about 50,000 cm³/(m² * 24h * atm) to about 500,000 cm³/(m² * 24h * atm) at 60°C. The vent may have a carbon dioxide (CO₂) permeability of from about 75,000 cm³/(m² * 24h * atm) to about 500,000 cm³/(m² * 24h * atm) at 60°C. The vent may have a carbon dioxide (CO₂) permeability of from about 10,000 cm³/(m² * 24h * atm) to about 450,000 cm³/(m² * 24h * atm) at 60°C. The vent may have a carbon dioxide (CO₂) permeability of from about 10,000 cm³/(m² * 24h * atm) to about 400,000 cm³/(m² * 24h * atm) at 60°C. The vent may have a carbon dioxide (CO₂) permeability of from about 10,000 cm³/(m² * 24h * atm) to about 350,000 cm³/(m² * 24h * atm) at 60°C. The vent may have a carbon dioxide (CO₂) permeability of from about 10,000 cm³/(m² * 24h * atm) to about 300,000 cm³/(m² * 24h * atm) at 60°C.

The protective fluoropolymer layer may have a carbon dioxide permeability of at least 25,000 cm³/(m² * 24h * atm) at 60°C. The protective fluoropolymer layer may have a carbon dioxide (CO₂) permeability of at least 50,000 cm³/(m² * 24h * atm) at 60°C. The protective fluoropolymer layer may have a carbon dioxide (CO₂) permeability of at least 75,000 cm³/(m² * 24h * atm) at 60°C. The protective fluoropolymer layer may have a carbon dioxide (CO₂) permeability of at least 100,000 cm³/(m² * 24h * atm) at 60°C.

The protective fluoropolymer layer may have a carbon dioxide (CO₂) permeability of from about 10,000 cm³/(m² * 24h * atm) to about 500,000 cm³/(m² * 24h * atm) at 60°C. The protective fluoropolymer layer may have a carbon dioxide (CO₂) permeability of from about 25,000 cm³/(m² * 24h * atm) to about 500,000 cm³/(m² * 24h * atm) at 60°C. The protective fluoropolymer layer may have a carbon dioxide (CO₂) permeability of from about 50,000 cm³/(m² * 24h * atm) to about 500,000 cm³/(m² * 24h * atm) at 60°C. The protective fluoropolymer layer may have a carbon dioxide (CO₂) permeability of from about 75,000 cm³/(m² * 24h * atm) to about 500,000 cm³/(m² * 24h * atm) at 60°C. The protective fluoropolymer layer may have a carbon dioxide (CO₂) permeability of from about 10,000 cm³/(m² * 24h * atm) to about 450,000 cm³/(m² * 24h * atm) at 60°C. The protective fluoropolymer layer may have a carbon dioxide (CO₂) permeability of from about 10,000 cm³/(m² * 24h * atm) to about 400,000 cm³/(m² * 24h * atm) at 60°C. The protective fluoropolymer layer may have a carbon dioxide (CO₂) permeability of from about 10,000 cm³/(m² * 24h * atm) to about 350,000 cm³/(m² * 24h * atm) at 60°C. The protective fluoropolymer layer may have a carbon dioxide (CO₂) permeability of from about 10,000 cm³/(m² * 24h * atm) to about 300,000 cm³/(m² * 24h * atm) at 60°C.

The vent may have a CO₂ permeability that is at least 60% the CO₂ permeability the at least one protective fluoropolymer layer alone. The vent may have a CO₂ permeability that is at least 65% the CO₂ permeability the at least one protective fluoropolymer layer alone. The vent may have a CO₂ permeability that is at least 70% the CO₂ permeability the at least one protective fluoropolymer layer alone. The vent may have a CO₂ permeability that is at least 75% the CO₂ permeability the at least one protective fluoropolymer layer alone. The vent may have a CO₂ permeability that is at least 80% the CO₂ permeability the at least one protective fluoropolymer layer alone.

The vent may comprise at least two protective fluoropolymer layers and a binding layer connecting two protective fluoropolymer layers together. The binding layer may be a reinforcing layer. The vent may comprise at least two reinforcing layers and the at least two protective fluoropolymer layers are sandwiched between the at least two reinforcing layers.

The vent may comprise at least two reinforcing layers and the at least one protective fluoropolymer layers may be sandwiched between the at least two reinforcing layers. The at least one protective fluoropolymer layers may permeate into each of the at least two reinforcing layers.

The vent may have a burst pressure at a 5 mm diameter of at least 400 kPa as measured using the methods described herein. The vent may have a burst pressure at a 5 mm diameter of at least 450 kPa. The vent may have a burst pressure at a 5 mm diameter of at least 500 kPa.

The vent may configured to be installed in a closed container. The closed container may be a battery housing. Accordingly, the vent may be suitable for use in a battery housing. The battery housing may be part of a battery. The battery may be a secondary battery. The secondary battery may be a lithium-ion battery. The battery may comprise a positive electrode and a negative electrode. The positive electrode may be chosen from: Lithium Nickel Manganese Cobalt Oxide ("NMC"), Lithium Nickel Cobalt Aluminum Oxide ("NCA"), Lithium Manganese Oxide ("LMO"), Lithium Iron Phosphate ("LFP"), Lithium Cobalt Oxide ("LCO"), or any combination thereof. The negative electrode may be chosen from: Lithium, Graphite, Lithium Titanate ("LTO"), a Tin-Cobalt alloy, or any combination thereof.

In some embodiments, the battery may comprise at least one separator. The at least one separator may comprise at least one material chosen from polypropylene, polyethylene, at least one tetrafluoroethylene (TFE) polymer or copolymer, at least one homopolymer of vinylidene fluoride, at least one hexafluoropropylene (HFP)-vinylidene fluoride copolymer, or any combination thereof.

The electrolyte may be an electrolytic solution, wherein the electrolytic solution may comprise at least one solvent and at least one electrolytic salt. The at least one solvent of the electrolytic solution may comprise at least one organic solvent. The at least one organic solvent of the electrolyte may be chosen from propylene carbonate, ethylene carbonate, diethyl carbonate (DEC), dimethyl carbonate (DMC), ethylmethyl carbonate (EMC) or mixtures thereof.

The electrolyte may comprise at least one additive, wherein the at least one additive may be configured to release the at least one gas chosen from CO₂, H₂, CO, CH₄ or any combination thereof during operation of the battery. The at least one additive may be selected from the group comprising vinylene carbonate (VC), ethylene sulfite (ES), and fluoroethylene carbonate (FEC).

The electrolyte may be impregnated within the at least one separator.

The closed container may be a pouch. The closed container may be a battery pouch. The closed container may be configured to retain battery fluid that allows the transfer of ions from a first electrode to a second electrode through the battery fluid. Accordingly, the closed container may retain at least two electrodes and at least two electrical contacts that are configured to connect the at least two electrodes to an external electrical circuit. The at least one container wall may be configured to be substantially impervious to the fluid that is retained within the closed container. For example, the battery pouch may be a lithium (Li) ion pouch cell

At least one container wall within the plurality of container walls may be a rigid container wall. The rigid container wall may comprise a rigid polymer material. The rigid container wall may comprise a thermoplastic material. The rigid container wall may comprise a reinforced thermoplastic material. For example, the rigid container wall may comprise a thermoplastic material such as polypropylene (PP), polyethylene (PE), polybutylene terephthalate (PBT), or polyethylene terephthalate (PET) reinforced with a fiber such as glass fiber or similar. The rigid container may comprise a rigid metallic material. The rigid container wall may comprise aluminium, steel, stainless steel, copper, brass, bronze, tin or lead, for example.

In a second aspect there is provided a vent for use in a closed container comprising: at least one perfluoroalkoxy alkane (PFA) layer or at least one fluorinated ethylene propylene (FEP) layer; and at least one ePTFE layer, wherein the at least one PFA layer or at least one FEP layer at least partially penetrates into the at least one ePTFE layer, wherein the at least one PFA or FEP layer has a thickness of from 5 µm to 150 µm.

The vent may comprise at least two ePTFE layers and the at least one PFA layer or at least one FEP layer may be sandwiched between the at least two ePTFE layers.

The at least one PFA layer or at least one FEP layer may at least partially penetrate into both of the at least two ePTFE layers.

The at least one PFA layer or at least one FEP layer may have a thickness of from 10 µm to 25 µm.

According to a third aspect there is provided a method of making a vent of the first aspect, the method comprising the steps:
providing at least one reinforcing layer and at least one protective fluoropolymer layer;
arranging the at least one reinforcing layer to at least partially occlude the at least one protective fluoropolymer layer; and
applying heat and pressure to the at least one reinforcing layer,
wherein the at least one protective fluoropolymer layer at least partially permeates into the at least one reinforcing layer.

The heat applied to the at least one reinforcing layer may correspond to applying a temperature of from 100°C to 325°C to the at least one reinforcing layer. The heat applied to the at least one reinforcing layer may correspond to applying a temperature of from 300°C to 325°C.

The pressure applied to the at least one reinforcing layer may be from 200 kPa to 10000 kPa.

In a fourth aspect there is provided a closed container comprising a vent according to the first aspect or the second aspect, wherein the closed container comprises at least one wall and the wall comprises an aperture, and wherein the vent covers the aperture.

The vent may cover the aperture such that during use gas within the closed container may escape the closed container through the aperture and through the vent.

The closed container may be a battery housing. Accordingly, vent may be suitable for use in a battery housing. The secondary battery may be a lithium-ion battery.

The positive electrode may be chosen from: Lithium Nickel Manganese Cobalt Oxide ("NMC"), Lithium Nickel Cobalt Aluminum Oxide ("NCA"), Lithium Manganese Oxide ("LMO"), Lithium Iron Phosphate ("LFP"), Lithium Cobalt Oxide ("LCO"), or any combination thereof.

The negative electrode may be chosen from: Lithium, Graphite, Lithium Titanate ("LTO"), a Tin-Cobalt alloy, or any combination thereof.

In some embodiments, the battery may comprise at least one separator. The at least one separator may comprise at least one material chosen from polypropylene, polyethylene, at least one tetrafluoroethylene (TFE) polymer or copolymer, at least one homopolymer of vinylidene fluoride, at least one hexafluoropropylene (HFP)-vinylidene fluoride copolymer, or any combination thereof.

The electrolyte may be an electrolytic solution, wherein the electrolytic solution may comprise at least one solvent and at least one electrolytic salt. The at least one solvent of the electrolytic solution may comprise at least one organic solvent. The at least one organic solvent of the electrolyte may be chosen from propylene carbonate, ethylene carbonate, diethyl carbonate (DEC), dimethyl carbonate (DMC), or mixtures thereof.

The electrolyte may comprise at least one additive, wherein the at least one additive may be configured to release the at least one gas chosen from CO₂, H₂, CO, CH₄ or any combination thereof during operation of the battery. The at least one additive may be selected from the group comprising vinylene carbonate (VC), ethylene sulfite (ES), and fluoroethylene carbonate (FEC).

The electrolyte may be impregnated within the at least one separator.

The closed container may be a pouch.

The closed container may be a battery pouch. The closed container may be configured to retain battery fluid that allows the transfer of ions from a first electrode to a second electrode through the battery fluid. Accordingly, the closed container may retain at least two electrodes and at least two electrical contacts that are configured to connect the at least two electrodes to an external electrical circuit. The at least one container wall may be configured to be substantially impervious to the fluid that is retained within the closed container. For example, the battery pouch may be a lithium (Li) ion pouch cell

At least one container wall within the plurality of container walls may be a rigid container wall. The rigid container wall may comprise a rigid polymer material. The rigid container wall may comprise a thermoplastic material. The rigid container wall may comprise a reinforced thermoplastic material. For example, the rigid container wall may comprise a thermoplastic material such as polypropylene (PP), polyethylene (PE), polybutylene terephthalate (PBT), or polyethylene terephthalate (PET) reinforced with a fiber such as glass fiber or similar. The rigid container may comprise a rigid metallic material. The rigid container wall may comprise aluminium, steel, stainless steel, copper, brass, bronze, tin or lead, for example.

The features of the vent of the first and second aspects are features or the vents of the third and fourth aspects.

### Brief Description of the Figures

Embodiments of the present invention will now be described, by way of non-limiting example, with reference to the accompanying drawings.
**Figure 1****:** A plot of gas transmission rate (GTR), CO₂ permeability, for vent materials at A) 30°C and at B) 60°C;
**Figure 2****:** A plot of burst pressure as a function of thickness for PFA films;
**Figure 3****:** A cross section of a vent according to an embodiment;
**Figure 4****:** A cross section of vent over an aperture according to an embodiment;
**Figure 5****:** A scanned electron microscope (SEM) side view of a vent according to an embodiment;
**Figure 6****:** Plots of burst pressure for vents according to embodiments over 5mm and 16mm diameter apertures for vents comprising A) 12µm PFA layers and B) 25µm PFA layers;
**Figure 7****:** Plots of burst pressure for vents according to embodiments over 5 mm and 16 mm diameter apertures compared to protective fluoropolymer layers alone;
**Figure 8****:** Plots of CO₂ permeability (GTR) as a function of selectivity for vents according to embodiments and protective fluoropolymer layers alone at A) 30°C and at B) 60°C;
**Figure 9****:** A schematic side view of a process of making a reinforced vent according to an embodiment;

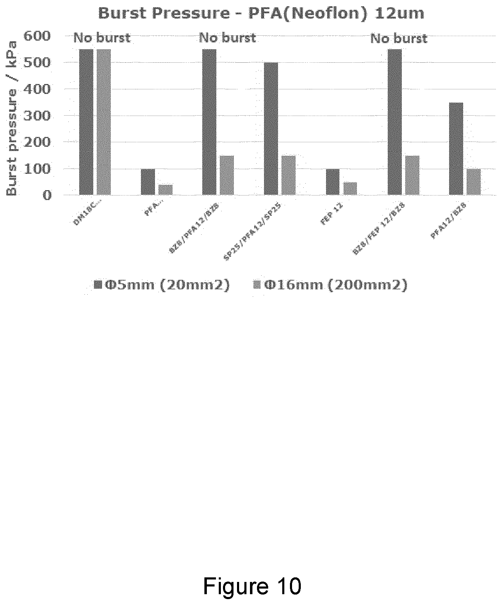

**Figure 10****:** A plot of burst pressure for vents according to embodiments over 5 mm and 16 mm diameter apertures for vents comprising 12 µm;

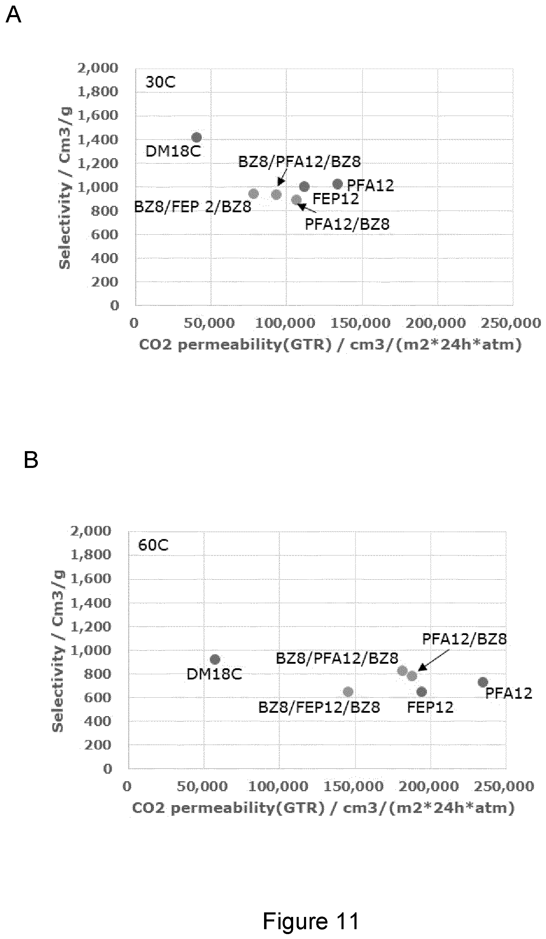

**Figure 11****:** Plots of CO₂ permeability (GTR) as a function of selectivity for vents according to embodiments and protective fluoropolymer layers alone at A) 30°C and at B) 60°C; and **Figure 12****:** A cross section of a vent according to an embodiment.

### Detailed Description

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

### Test Methods

### Method of measuring CO₂ permeability

CO₂ permeability was measured using a gas detector (model number GTR-11MJGG from GTR Tech). A sample vent is placed in an evaluation cell to cover an aperture having an area of 15.2 cm². A supply of CO₂ is supplied into the evaluation cell at a supply pressure of 99 kPa for a period of 0.1 to 10 minutes at a temperature of 30°C to 60°C.

### Method of measuring moisture permeability

Moisture (gaseous H₂O) permeability was measured where a sample vent divides a chamber into a high humidity section including liquid water and a low humidity section where a dry gas is flowed across the sample vent and the humidity in the low humidity section is measured. The area of sample vent exposed was 5.0 x 10⁻³ m².

### Method of calculating CO₂ vs H₂O selectivity

The CO₂ to H₂O selectivity of a sample vent was calculated converting the gas transmission rate (GTR, units of cm³/(m² x 24h x atm)) of the sample vent for CO₂ and moisture transmission rate (MVTR, units of g/(m² x day)) of the sample vent into respective permeability coefficients (CO₂: units of cm³/(cm² x s x cmHg, moisture: units of g/(cm² x s x cmHg)) and the selectivity is calculated as the CO₂ permeability coefficient divided by the moisture permeability coefficient.

### Method of measuring burst pressure

Burst pressure of a sample vent was measured by mounting the sample vent beneath a support screen. The support screen defines an aperture of 5 mm or 11 mm diameter. Water is directed at the aperture at a pressure of 550 kPa for a period of 30 minutes. The time for the sample vent to burst under this pressure was recorded.

Vents for closed containers that retain a liquid that are sensitive to water such as batteries and battery pouches need to be able to prevent the ingress of water liquid and water vapour into the closed container whilst also allowing waste gasses to be vented out of the closed container, such as carbon dioxide.

For batteries or battery pouches it is crucial that the vent comprises a material that has good carbon dioxide permeability to ensure that carbon dioxide generated within the battery or battery pouch is able to pass out of the closed container through the vent. However, the vent must comprise a material that is also substantially impermeable to the ingress of water vapour. Accordingly the material of the vent must selectively allow carbon dioxide to escape through the vent whilst preventing the ingress of water.

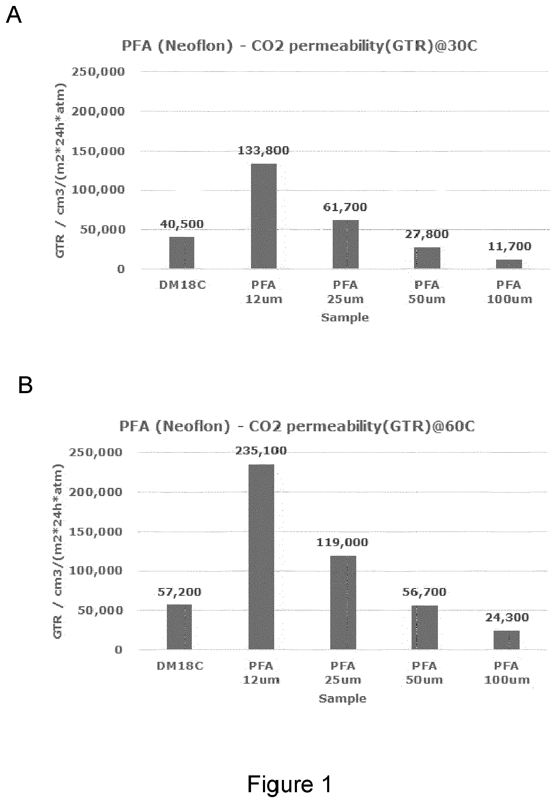

Example materials that have been found to be permeable to carbon dioxide and impermeable to water include fluoropolymers such as PFA and FEP. The carbon dioxide permeability of the material at a given temperature is typically a function of the thickness of the material. For example, the permeability ("gas transmission rate" or GTR) of PFA, FEP and ePTFE (labelled as DM18C) is shown in Figure 1. Accordingly, for a vent it is desirable to have a vent material as thin as possible to maximise the permeability of the material.

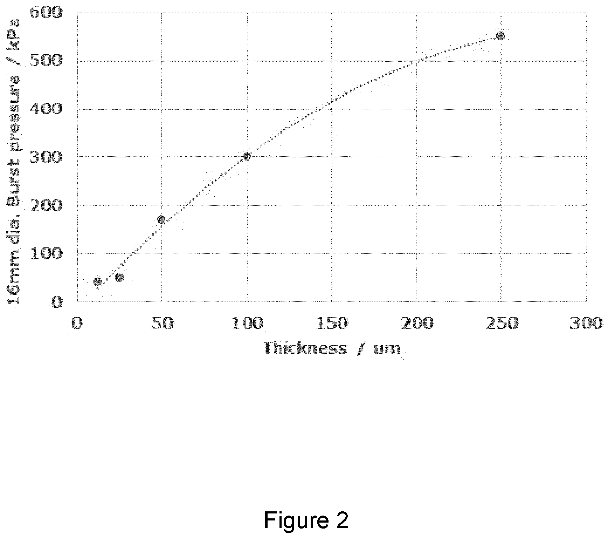

However, during use as pressure builds up within the closed container is necessary for the vent material to also be able to withstand the pressures applied against it. Thin fluoropolymer layers are typically unable to withstand large pressures. The burst pressure of PFA is shown as a function of thickness in Figure 2.

Accordingly, vents typically used in the art either use thicker layers or films of fluoropolymers to ensure structural stability whilst compromising permeability, or are comprised of other fluoropolymers such as expanded polytetrafluoroethylene (ePTFE) or densified ePTFE (i.e. expanded PTFE that is densified after the original PTFE has been expanded).

### Example 1 (BZ8/PFA8/BZ8)

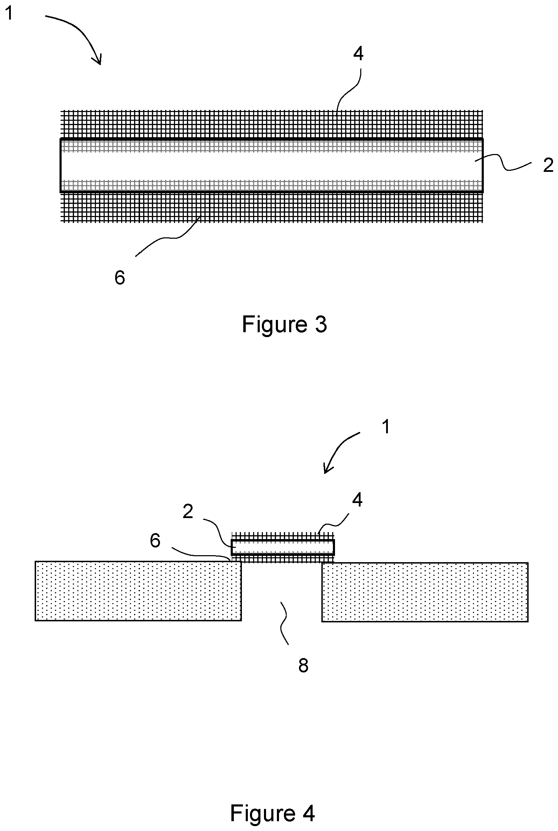

With reference to Figure 3 a reinforced vent 1 (acting as a vent) comprises a PFA layer 2 (acting as a protective fluoropolymer layer), a first ePTFE layer 4 (acting as a first reinforcing layer) and a second ePTFE layer 6 (acting as a second reinforcing layer). The PFA layer 2 is provided sandwiched between the first ePTFE layer 4 and the second ePTFE layer 6 and the PFE layer 2 permeates into the pores of the first ePTFE layer 4 and the second ePTFE layer 6.

The PFA layer 2 had a thickness of 12 µm and comprised PFE Neoflon A as provided by Daikin Japan. The first ePTFE layer 4 and the second ePTFE layer 6 both had a thickness of 8 µm and comprised ePTFE as provided by W.L.Gore & Associates, Inc..

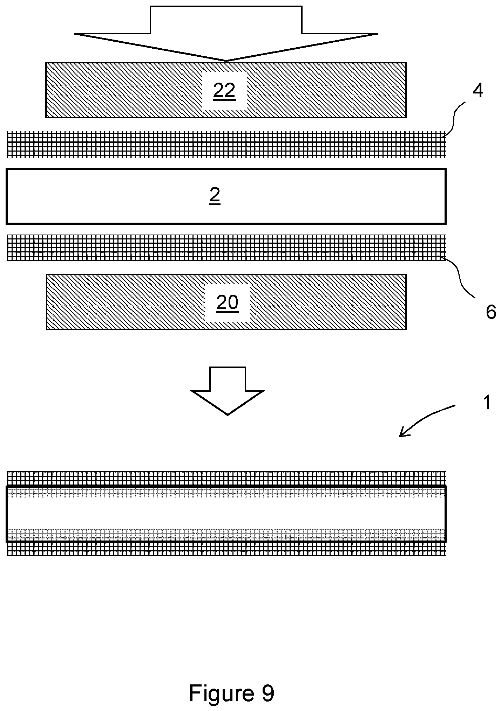

With reference to Figure 9 the reinforced vent 1 was made by arranging the PFA layer 2 between the first ePTFE layer 4 and the second ePTFE layer 6 to form a stack and the stack was placed on a first plate 20. A second plate 22 was placed on top of the stack. The first plate and the second plate were heated such that the stack was heated to 300°C and a pressure of 6500 kPa was applied to the stack. The PFA layer 2 at least partially melts and permeates into the pores of the first ePTFE layer 4 and the pores of the second ePTFE layer 6.

A side view of the reinforced vent 1 over an aperture 8 in a closed container is shown in Figure 4.

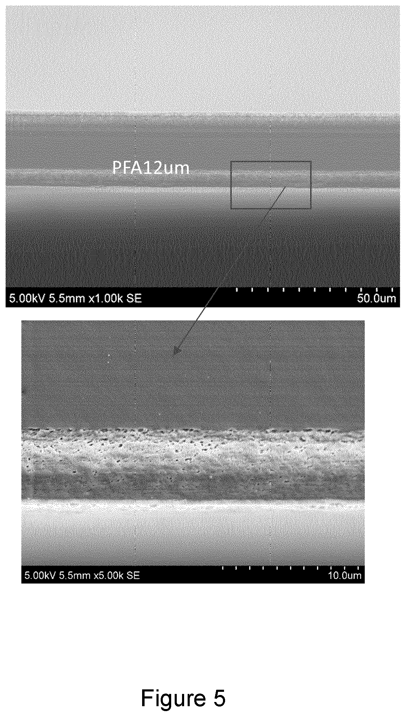

An SEM image of the reinforced vent 1 is shown in Figure 5 where the PFA can be seen penetrating into the ePTFE.

### Example 2 (BZ8/PFA25/BZ8)

An alternative reinforced vent comprises a PFA layer having a thickness of 25 µm, a first ePTFE layer having a thickness of 25 µm and a second ePTFE layer having a thickness of 25 µm.

### Example 3 (BZ8/FEP12/BZ8)

A further alternative reinforced vent comprises a FEP layer having a thickness of 12 µm, a first ePTFE layer having a thickness of 8 µm and a second ePTFE layer having a thickness of 8 µm.

### Example 4 (SP25/PFA12/SP25)

A further alternative reinforced vent comprises a PFA layer having a thickness of 12 µm, a first ePTFE layer having a thickness of 25 µm and a second ePTFE layer having a thickness of 25 µm.

### Example 5 (BZ8/PFA12/BZ8)

A further alternative reinforced vent comprises a PFA layer having a thickness of 12 µm, a first ePTFE layer having a thickness of 8 µm and a second ePTFE layer having a thickness of 8 µm.

### Example 6 (PFA12/BZ8)

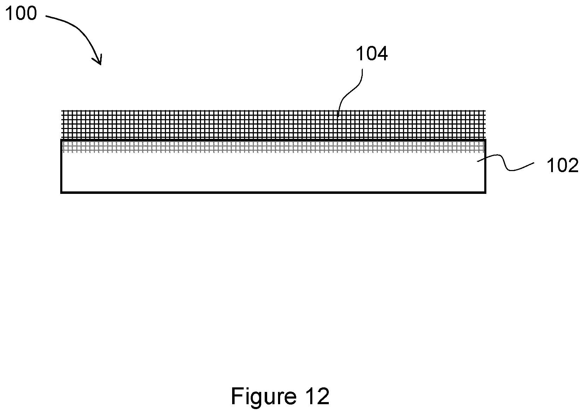

With reference to Figure 12 a further alternative reinforced vent 100 comprises a PFA layer 102 having a thickness of 12 µm and a single ePTFE layer 104 having a thickness of 8 µm provided on one side only.

The reinforced vents of the examples were tested to determine the burst pressure, CO₂ permeability, and selectivity of each reinforced vent.

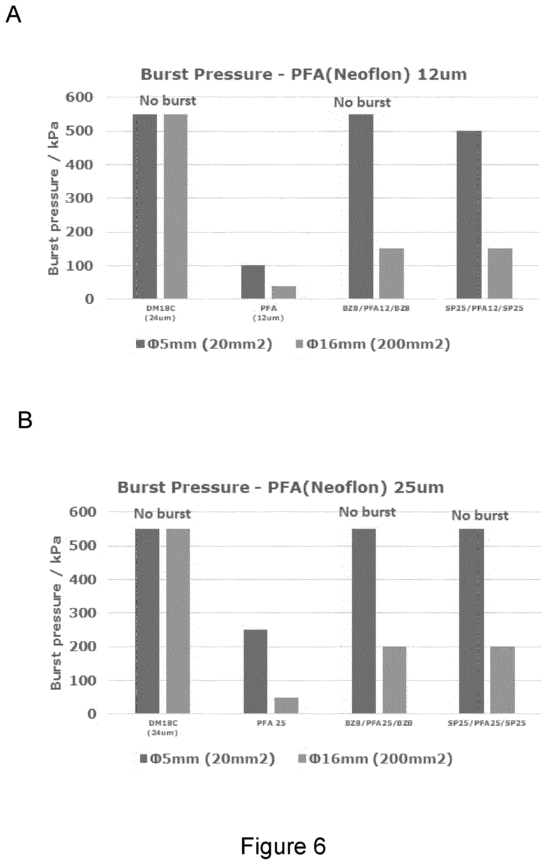

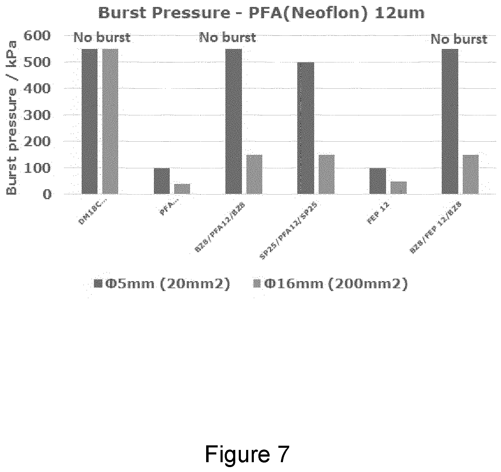

As shown in Figures 6 and 7 the reinforced vents of the examples had clearly superior burst pressures when compared to the protective fluoropolymer layers along (PFA or FEP).

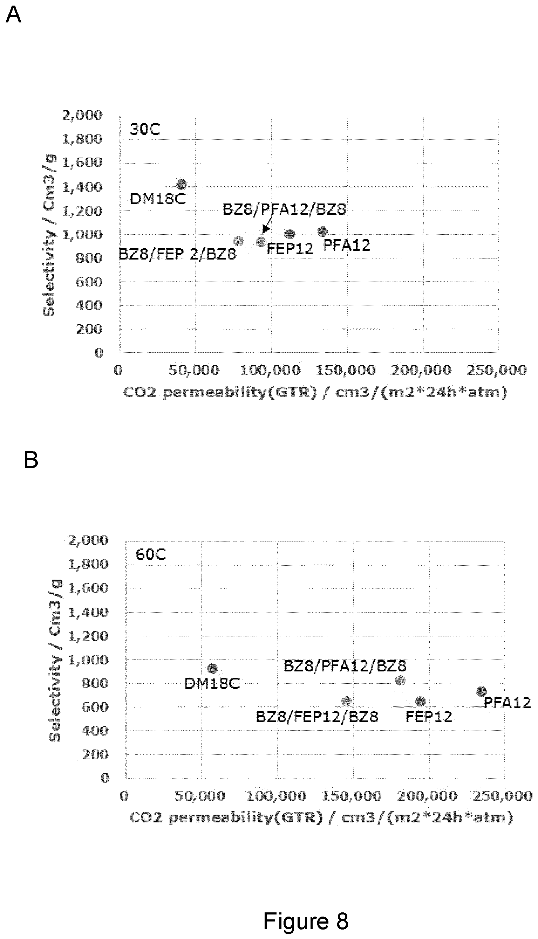

Figure 8 shows the selectivity vs the CO₂ permeability is comparable to that of the protective fluoropolymer layers alone.

While there has been hereinbefore described approved embodiments of the present invention, it will be readily apparent that many and various changes and modifications in form, design, structure and arrangement of parts may be made for other embodiments without departing from the invention and it will be understood that all such changes and modifications are contemplated as embodiments as a part of the present invention as defined in the appended claims.

## Claims

1. A vent for use in a closed container, the vent comprising: at least one perfluoroalkoxy alkane (PFA) layer or at least one fluorinated ethylene propylene (FEP) layer; and at least one ePTFE layer, wherein the at least one PFA layer or at least one FEP layer at least partially penetrates into the at least one ePTFE layer, wherein the at least one PFA or FEP layer has a thickness of from 5 µm to 150 µm.

2. The vent of claim 1, wherein the vent comprises at least two ePTFE layers and the at least one PFA layer or at least one FEP layer is sandwiched between the at least two ePTFE layers.

3. The vent of claim 2, wherein the at least one PFA layer or at least one FEP layer at least partially penetrates into both of the at least two ePTFE layers.

4. A vent for use in a closed container, the vent comprising at least one protective fluoropolymer layer and at least one reinforcing layer, wherein the at least one protective fluoropolymer layer at least partially permeates into the at least one reinforcing layer, wherein the at least one protective fluoropolymer layer has a carbon dioxide (CO₂) to water (H₂O) selectivity of at least 600 cm³/g at 30°C and a CO₂ permeability of at least 10,000 cm³/(m² * 24h * atm) at 30°C as measured using methods described herein.

5. The vent of claim 4, wherein the at least protective fluoropolymer layer comprises a fluoropolymer having a melting point of less than 320°C.

6. The vent of claim 4 or 5, wherein the at least one protective fluoropolymer layer comprises a fluoropolymer selected from the group consisting of perfluoroalkoxy alkane (PFA), fluorinated ethylene propylene (FEP), polyvinylfluoride (PVF), polyvinylidene fluoride (PVDF), polychlorotrifluoroethylene (PCTFE), or polyethylenetetrafluoroethylene (ETFE).

7. The vent of any of claim 4 to claim 6, wherein the at least one reinforcing layer is porous.

8. The vent of any of claim 4 to claim 7, wherein the vent comprises at least two reinforcing layers, wherein a protective fluoropolymer layer is sandwiched between the at least two reinforcing layers.

9. The vent of any preceding claim, wherein the vent has a carbon dioxide to water vapour selectivity of at least 800 cm³/g at 30°C.

10. The vent of claim 9, wherein the vent comprises at least two reinforcing layers and the at least two protective fluoropolymer layers are sandwiched between the at least two reinforcing layers.

11. A method of making a vent of any one of claim 4 to claim 10, the method comprising the steps:
providing at least one reinforcing layer and at least one protective fluoropolymer layer;
arranging the at least one reinforcing layer to at least partially occlude the at least one protective fluoropolymer layer; and
applying heat and pressure to the at least one reinforcing layer,
wherein the at least one protective fluoropolymer layer at least partially permeates into the at least one reinforcing layer.

12. The method of claim 11, wherein the heat applied to the at least one reinforcing layer corresponds to applying a temperature of from 100°C to 325°C, preferably 300°C to 325°C.

13. A closed container comprising an aperture and a vent of any of claim 1 to claim 10, wherein the vent covers the aperture such that during use gas within the closed container may escape the closed container through the aperture and through the vent.

14. The closed container of claim 13, wherein the closed container is a battery.

15. The closed container of claim 13 or claim 14, wherein the closed container comprises at least one flexible wall.
